# FASCICULE DE BREVET EUROPEEN

(11) **EP 2 763 841 B1**
(45) Date de publication et mention de la délivrance du brevet: **18.03.2015**
(21) Numéro de dépôt: 12775801.9
(22) Date de dépôt: 01.10.2012
(51) Int. Cl.: B29C 70/46, B29C 33/48, B29L 31/30, B29L 31/00, B29K 309/02, B29C 70/48, B29C 33/20, B29C 33/42, B29K 63/00, B29K 79/00, B29K 307/04, B29K 309/08

(54) **DISPOSITIF ET METHODE POUR LA FABRICATION D'UNE PIECE EN MATERIAU COMPOSITE**
VORRICHTUNG UND VERFAHREN ZUR HERSTELLUNG EINES TEILS AUS EINEM VERBUNDWERKSTOFF
DEVICE AND METHOD FOR PRODUCING A PART FROM A COMPOSITE MATERIAL

(30) Priorité: 06.10.2011 FR 1159012
(43) Date de publication de la demande: 13.08.2014
(73) Titulaire: SNECMA, 75015 Paris (FR)
(72) Inventeur: PLANTE, Romain, F-77550 Moissy-Cramayel Cedex (FR); CANAVESE, Claude, F-01100 Groissiat (FR); PINGON, Denis, F-01110 Hauteville Lompnes (FR); DURAND, Jean-François, F-12160 Baraqueville (FR)
(74) Mandataire: Besnard, Christophe Laurent
(86) Numéro de dépôt international: PCT/FR2012/052218
(87) Numéro de publication internationale: WO 2013/050692

(56) Documents cités:
- DE-C- 742 682
- US-A- 3 376 184
- US-A- 5 597 435
- US-A1- 2009 098 337

## Description

### DOMAINE DE L'INVENTION

Le présent exposé concerne un dispositif pour la fabrication d'une pièce en matériau composite.

Un tel dispositif peut être utilisé pour fabriquer une pièce en matériau composite et, notamment, un carter de soufflante de moteur d'avion.

### ETAT DE LA TECHNIQUE ANTERIEURE

Dans un moteur d'avion, le carter de soufflante remplit généralement plusieurs fonctions. Il définit la veine d'entrée d'air dans le moteur, supporte un matériau abradable en regard du sommet des aubes de la soufflante, supporte une structure éventuelle d'absorption d'ondes sonores pour le traitement acoustique en entrée du moteur et incorpore ou supporte un bouclier de rétention. Ce bouclier constitue un piège retenant les débris, tels que des objets ingérés ou des fragments d'aube endommagée, projetés par la centrifugation, afin d'éviter que ces débris ne traversent le carter et atteignent d'autres parties de l'avion.

Il est connu de réaliser les carters de soufflante en matériau composite. Le document EP 1961923 décrit, par exemple, une méthode de fabrication d'un carter en matériau composite à épaisseur évolutive. Les documents de brevet US 5597435 et US 2009/0098337 décrivent d'autres exemples.

La méthode du document EP 1961923 comprend une étape de formation d'une structure fibreuse de renfort, souvent appelée "préforme", et la densification de cette préforme par une matrice en résine. La préforme fibreuse est réalisée par superposition de plusieurs couches de bande fibreuse. Dans cet exemple, la bande fibreuse est réalisée par tissage tridimensionnel et est enroulée sur un mandrin, en plusieurs couches superposées, pour former la préforme. Le mandrin utilisé présente une paroi centrale de forme extérieure correspondant à la forme intérieure de la paroi principale du carter, et deux flasques latéraux de forme correspondant à celles des brides de fixation du carter. La préforme fibreuse ainsi obtenue est maintenue sur le mandrin, puis enfermée dans un moule formé en partie par le mandrin, et imprégnée d'une résine injectée dans le moule.

Au cours de l'étape d'imprégnation, il a été constaté que les couches de bande fibreuse ont tendance à se tendre et à se décoller au niveau des angles rentrants définis entre les flasques et la paroi centrale du mandrin, ce qui génère des défauts de compactage et des amas de résine entre les couches et, par la suite, une irrégularité de structure dans le carter au niveau de ces angles.

Pour pallier ce problème, il est connu de mettre en place des cales, dites "cales de compactage", configurées pour plaquer la préforme fibreuse dans lesdits angles, lors de l'injection. Or, classiquement, la mise en place des cales se fait manuellement : les cales sont amenées en position manuellement par frottement, en aveugle, et sont ensuite fixées par vissage à une autre partie du moule. Cette étape de mise en place des cales est donc une opération lente et difficile, non compatible avec une cadence de production en série et qui, en outre, peut conduire à un mauvais positionnement des cales.

Il existe donc un besoin pour un nouveau type de dispositif facilitant la mise en place des cales.

### PRESENTATION DE L'INVENTION

Le présent exposé concerne un dispositif pour la fabrication d'une pièce en matériau composite, la pièce composite étant fabriquée par injection de résine dans une structure fibreuse, ce dispositif comprenant :
une première matrice configurée pour supporter la structure fibreuse, la première matrice présentant deux surfaces de support adjacentes définissant entre elles un angle rentrant,
au moins une cale présentant des première et deuxième faces adjacentes définissant ensemble une partie en coin configurée pour plaquer la structure fibreuse dans ledit angle, et
une deuxième matrice mobile par rapport à la première matrice, les première et deuxième matrices étant configurées pour enserrer la structure fibreuse et la cale de sorte que la première matrice, la deuxième matrice et la cale définissent ensemble, en position fermée, un espace d'injection de résine entourant la structure fibreuse.

La position fermée, ou position d'injection, est donc la position dans laquelle le dispositif se trouve lors de l'injection de résine.

Dans le dispositif proposé, la cale est reliée à la deuxième matrice par au moins une bielle, cette bielle étant articulée par rapport à la deuxième matrice et à la cale de manière à guider la partie de coin vers ledit angle pour plaquer la structure fibreuse (ou préforme fibreuse) dans cet angle, lorsque la deuxième matrice se rapproche de la première.

Grâce à cette (ces) bielle(s), le positionnement de la cale dans l'angle rentrant défini entre les deux surfaces de support de la première matrice, et donc le plaquage de la structure fibreuse dans cet angle, se fait automatiquement lors du rapprochement des matrices. Par comparaison à la méthode de positionnement manuelle connue, un tel positionnement automatique de la cale est plus rapide, plus sûr (le risque d'erreur humaine est diminué) et présente l'avantage d'être compatible avec une cadence de production en série.

Dans certains modes de réalisation, une troisième face de la cale est en appui sur la deuxième matrice dans ladite position fermée, cette troisième face étant à l'opposé des première et deuxième faces. Un tel appui garantit la stabilité du positionnement de la cale et la bonne transmission des efforts de compression, en position fermée.

Dans certains modes de réalisation, un joint est disposé entre la troisième face et la deuxième matrice, autour de la bielle. Ce joint permet d'éviter le passage de la résine entre la cale et la deuxième matrice et, en particulier, d'éviter que la résine vienne encrasser et ainsi bloquer la bielle et perturber le fonctionnement de l'ensemble.

Dans certains modes de réalisation, la cale est reliée à la deuxième matrice par au moins une paire de bielles parallèles entre elles. Ceci permet guider la cale et de repartir les efforts entre les bielles et, donc, de garantir une liaison fiable et durable au cours des cycles de production.

Dans certains modes de réalisation, la bielle est articulée sur des coquilles configurées pour être insérées, respectivement, dans des cavités ménagées dans la cale et la deuxième matrice. La bielle et les coquilles forment alors un module amovible par rapport à la cale et à la deuxième matrice. Le cas échéant, ce module peut être remplacé facilement. La fabrication de la cale et de la deuxième matrice s'en trouve également simplifiée. Les coquilles peuvent être solidarisées à la cale et à la deuxième matrice par tout moyen de fixation approprié, par exemple les coquilles sont emboîtées en force dans lesdites cavités et/ou peuvent être maintenues en position par boulonnage.

Dans certains modes de réalisation, la première matrice est un mandrin autour duquel la structure fibreuse est enroulée, le mandrin comprenant une paroi centrale et au moins un flasque latéral, cette paroi et ce flasque définissant lesdites surfaces de support adjacentes. Ainsi, ladite cale permet d'assurer le plaquage de la structure fibreuse entre la paroi centrale et le flasque latéral lors de l'injection de résine.

Dans certains modes de réalisation, le dispositif comprend plusieurs cales, chaque cale se présentant sous la forme d'un segment d'anneau, les cales étant disposées bout à bout pour couvrir la circonférence totale du mandrin. Dans ce cas, les bielles peuvent être reliées au niveau des extrémités de chaque segment d'anneau, par exemple par emboitement autobloquant.

Le présent exposé a également pour objet une méthode de fabrication d'une pièce en matériau composite, dans laquelle on injecte une résine dans une structure fibreuse pour former ladite pièce en matériau composite, et dans laquelle on utilise le dispositif proposé pour supporter la structure fibreuse et définir un espace d'injection de résine entourant cette structure fibreuse.

D'une manière générale, ladite pièce en matériau composite peut être toute pièce présentant deux surfaces extérieures adjacentes définissant entre elles un angle sortant, ces deux surfaces extérieures correspondant aux deux surfaces de support adjacentes de la première matrice lors de la fabrication , et l'angle sortant de la pièce correspondant à l'angle rentrant de la matrice.

Plus particulièrement, ladite pièce peut être une pièce axisymétrique possédant au moins une bride sensiblement perpendiculaire à l'axe de la pièce, ledit angle rentrant correspondant à l'angle sortant formé à la base de la bride.

Dans certains modes de mise en oeuvre, ladite pièce est un carter de soufflante de moteur d'avion, ce carter comprenant une paroi principale et au moins une bride de fixation, ledit angle rentrant correspondant à l'angle sortant formé entre la paroi principale et la bride de fixation.

Le carter est, par exemple, réalisé à partir d'une structure fibreuse en fibres de carbone, verre, aramide ou céramique, et d'une résine polymérique, e.g. époxyde, bismaléimide ou polyimide.

Les caractéristiques et avantages précités, ainsi que d'autres, apparaîtront à la lecture de la description détaillée qui suit, d'un exemple de réalisation du dispositif proposé. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est une vue de côté d'une machine d'enroulement d'une bande fibreuse sur un mandrin.
La FIG 2 est une vue de détail simplifiée, en perspective, du mandrin de la FIG 1.
Les FIGS 3 à 5 sont des vues de détail, en coupe axiale, d'un exemple de cale de compactage, illustrant les étapes successives du positionnement automatique de cette cale.
La FIG 6 est une vue de détail, en perspective, de la cale des FIGS 3 à 5.

### DESCRIPTION DETAILLEE D'EXEMPLE(S) DE REALISATION

Un exemple de réalisation est décrit en détail ci-après, en référence aux dessins annexés. Cet exemple illustre les caractéristiques et les avantages de l'invention. Il est toutefois rappelé que l'invention ne se limite pas à cet exemple. En particulier, bien que l'invention soit décrite ci-après dans le cadre de son application à la fabrication d'un carter de soufflante de moteur d'avion, l'invention ne se limite pas à cette application.

Un exemple de procédé de fabrication d'un carter de soufflante est décrit dans le document EP 1961923 auquel il est possible de se référer.

Brièvement, le procédé de fabrication décrit dans EP 1961923 consiste à réaliser une bande ou nappe fibreuse par tissage tridimensionnel avec appel en chaîne sur un tambour, appelé ci-après "mandrin d'appel". La nappe fibreuse ainsi réalisée est ensuite transférée sur le mandrin d'un moule d'injection de résine, appelé ci-après mandrin d'imprégnation, la forme extérieure de ce mandrin correspondant à la forme intérieure du carter à fabriquer. L'enroulement de la nappe fibreuse autour du mandrin d'imprégnation permet d'obtenir une structure fibreuse, également appelée "préforme", composée de plusieurs couches de nappe superposées.

La préforme maintenue enroulée sur le mandrin d'imprégnation est ensuite imprégnée de résine. Après imprégnation, une étape de polymérisation de la résine est réalisée.

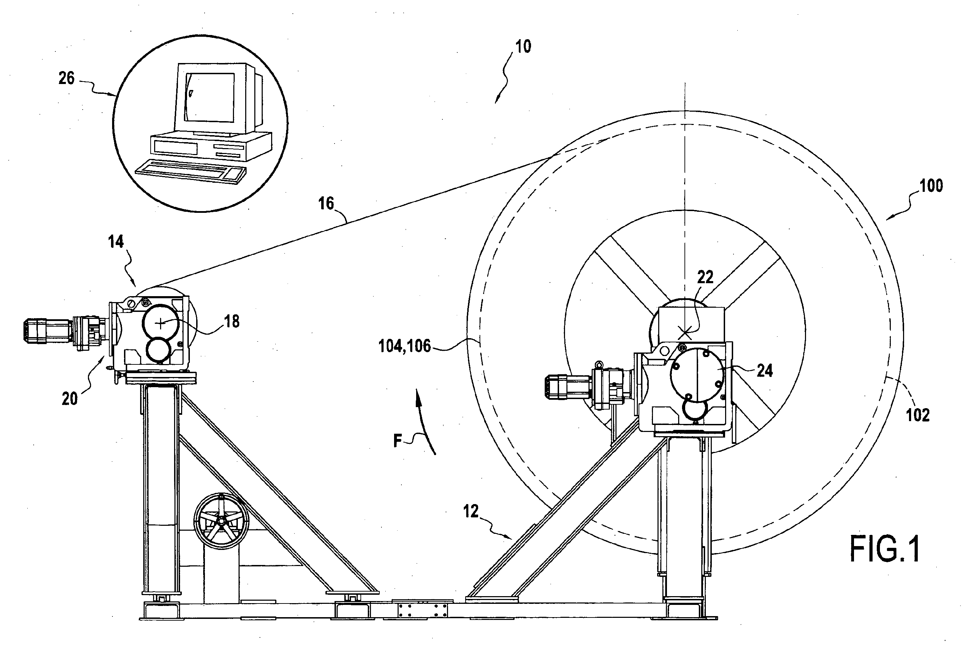

La FIG 1 illustre un exemple de machine d'enroulement 10 comprenant un bâti 12 supportant notamment un mandrin d'appel 14 et un mandrin d'imprégnation 100. Ces mandrins 14, 100 sont amovibles, c'est-à-dire qu'ils peuvent être démontés du bâti 12.

Le mandrin d'appel 14 porte la nappe fibreuse 16 obtenue par exemple par tissage tridimensionnel. Il est monté de façon rotative sur le bâti 12, et est entrainé en rotation autour d'un axe 18 par moteur électrique 20.

Le mandrin d'imprégnation 100 est destiné à recevoir en couches superposées les nappes fibreuses 16 stockées sur le mandrin d'appel 14. Le mandrin d'imprégnation 100 présente une paroi centrale 102 cylindrique de révolution et deux flasques latéraux 104, 106 (voir FIGS 1-2) s'étendant suivant une direction générale perpendiculaire au mandrin 100. Les flasques latéraux 104, 106 définissent ainsi avec la paroi centrale 102 des angles rentrants A. La forme extérieure du mandrin 100 correspond à la forme intérieure du carter à fabriquer. Plus précisément, la surface extérieure de la paroi centrale 102 correspond à la surface intérieure de la paroi principale du carter. De plus, la surface latérale (celle tournée vers la paroi centrale 102) des flasques latéraux 104, 106 correspond à la surface latérale des brides de fixation du carter, ces brides étant prévues aux extrémités axiales du carter pour permettre son montage et sa liaison avec d'autres éléments.

Le mandrin d'imprégnation 100 est monté de manière rotative sur le bâti 12, autour d'un axe horizontal 22 parallèle à l'axe de rotation 18 du mandrin d'appel 14, et est entraîné en rotation par un moteur électrique 24. Dans le présent exposé, la direction axiale correspond à la direction de l'axe 22 de rotation du mandrin 100, et une direction radiale est une direction perpendiculaire à cet axe. De même, un plan axial est un plan contenant l'axe 22 et un plan radial est un plan perpendiculaire à cet axe 22.

Une unité de commande 26 est reliée aux moteurs électriques 20, 24 et permet de commander et contrôler de la vitesse de rotation de chaque mandrin 14, 100. De manière plus générale, cette unité de commande 26 permet de piloter l'ensemble des paramètres de fonctionnement de la machine d'enroulement 10.

L'enroulement de la nappe fibreuse en couches superposées sur le mandrin d'imprégnation 100 s'effectue selon le sens de rotation repéré par la flèche F sur la FIG 1. A titre d'exemple, il est possible d'enrouler la nappe 16 sur environ quatre tours du mandrin 100, afin d'obtenir une structure fibreuse 28 formée de quatre couches superposées, présentant une épaisseur conforme aux spécifications du carter à fabriquer.

Le mandrin 100 constitue une première matrice au sens du présent exposé.

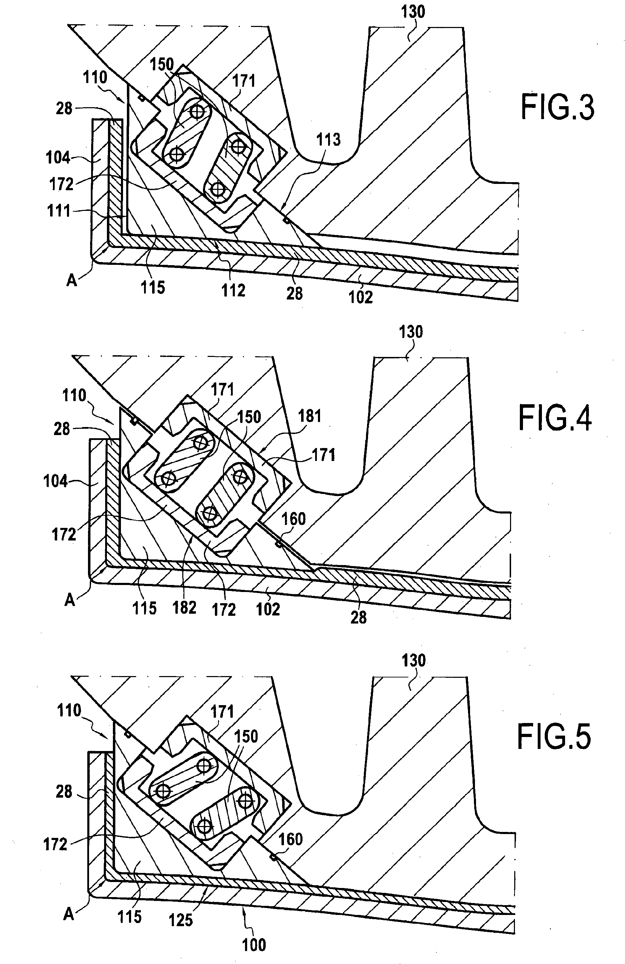

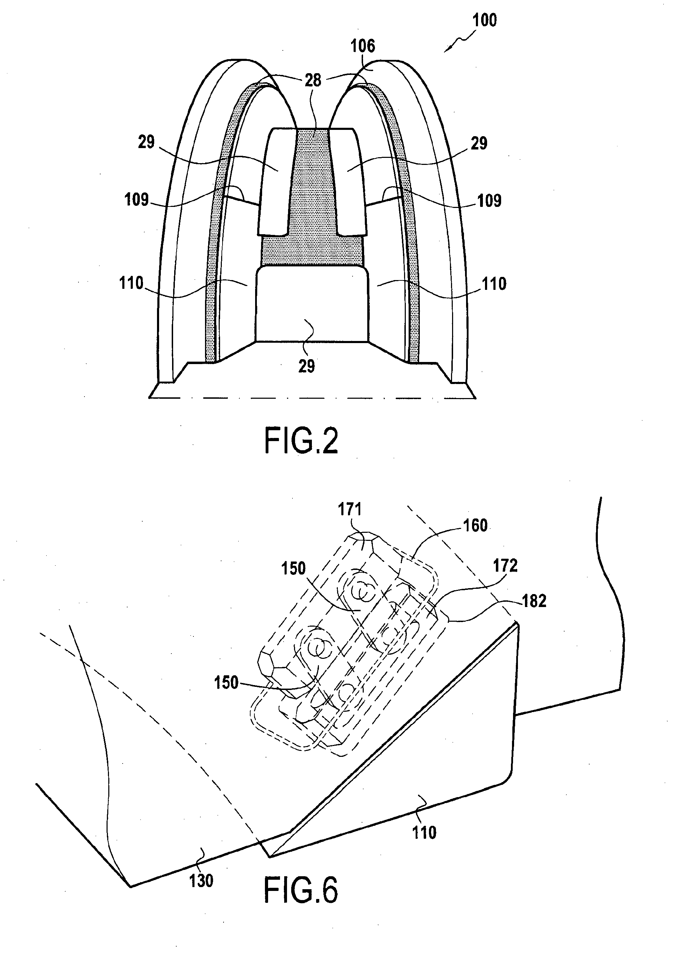

Après l'étape d'enroulement, le mandrin 100 est déplacé pour être associé à d'autres éléments dont une deuxième matrice 130, comme représenté sur les FIGS 2 à 6. Plus précisément, des éléments de protection 29 peuvent être disposés sur la structure fibreuse 28 afin de protéger et éviter les pincement de la structure fibreuse et des cales angulaires 110, souvent appelées "cales de compactage", sont positionnées sur le mandrin 100 au niveau des parties de la structure fibreuse 28 recouvrant les angles rentrants A formés entre la paroi centrale 102 et les flasques latéraux 104, 106 du mandrin 100. Il est important de noter que sur la FIG 2, par souci de clarté, la deuxième matrice 130 n'est pas représentée. Pourtant, comme expliqué ci-après, et comme représenté sur les FIGS 3-6, chaque cale 110 est reliée par des bielles 150 à cette matrice 130. Les bielles 150 ne sont pas non plus représentées sur la FIG 2 (elles le sont sur les FIGS 3-6).

Une de ces cales 110 est représentée en détail et en coupe axiale sur les FIGS 3 à 5. Chaque cale 110 présente des première et deuxième faces 111, 112 adjacentes définissant ensemble une partie en coin 115 avec un angle sortant correspond sensiblement à l'angle rentrant A. Cette partie en coin 115 est configurée pour plaquer la structure fibreuse 28 dans l'angle A. La cale 110 présente également une troisième face 113 à l'opposé des première et deuxième faces 111, 112. La cale 110 présente un profil axial triangulaire (voir FIGS 3-5), les trois côtés de ce profil correspondant auxdites faces 111-113. Chaque cale 110 se présente sous la forme d'un segment d'anneau s'étendant circonférentiellement autour du mandrin 100, de sorte que les cales 110 disposées bout à bout couvrent la circonférence totale du mandrin 100. Sur la FIG 2, la référence 109 désigne l'interface entre deux cales 110 adjacentes. Dans l'exemple illustré, chaque série de cales 110 se compose de quatre cales 110 s'étendant chacune angulairement sur 90° environ. Bien entendu, le nombre de cales 110 pourrait être différent.

Le dispositif comprend également une deuxième matrice 130 mobile par rapport au mandrin 100 (le mandrin 100 constituant la première matrice). La deuxième matrice 130, également appelée "contre-forme", entoure extérieurement et circonférentiellement le mandrin 100 et les cales 110. Ainsi, la deuxième matrice 130 et le mandrin 100 enserrent la structure fibreuse 28 et les cales 110.

Chaque cale 110 est reliée à la deuxième matrice 130 par des paires de bielles 150, les bielles d'une même paire étant parallèles entre elles et les axes de rotation de ces bielles étant parallèles entre eux. Dans l'exemple, une paire de bielles 150 est prévue à chacune des extrémités circonférentielles de chaque cale 110. Une ou plusieurs paires de bielle peuvent être ajoutées à égale distance de celles situées aux deux extrémités. Chaque bielle 150 est articulée par rapport à la deuxième matrice 130 et à la cale 110 de manière à guider la partie de coin 115 vers l'angle A pour plaquer la structure fibreuse 28 dans cet angle A, lorsque la deuxième matrice 130 se rapproche du mandrin 100.

Les deux bielles 150 d'une même paire sont articulées sur des coquilles 171, 172 configurées pour être insérées, respectivement, dans des cavités 181, 182 ménagées dans la cale 110 et la deuxième matrice 130. Ainsi, les deux bielles 150 et les coquilles 171, 172 forment un module amovible par rapport à la cale 110 et à la deuxième matrice 130. Dans l'exemple, les coquilles 171, 172 sont emboîtées en force dans les cavités 181, 182.

Les FIGS 3-5 illustrent les étapes successives du positionnement automatique d'une des cales 110, lors du rapprochement de la deuxième matrice 130 et du mandrin 100. Dans cet exemple, la matrice 130 se déplace alors que le mandrin 100 est immobile. La matrice 130 est rapprochée radialement du mandrin 100 (i.e. en référence à la FIG 3, la matrice 130 se déplace vers le bas). A mesure que la matrice 130 se rapproche radialement du mandrin 100, les bielles 150 pivotent de manière à entraîner la cale 110 en direction du flasque 104, le mouvement de la cale 110 ayant une composante selon une direction (la direction axiale dans l'exemple) perpendiculaire à la direction de rapprochement de la matrice 130 et du mandrin 100 (i.e. en référence à la FIG 3, la cale 110 se déplace vers la gauche).

Ainsi, la cale 110 est guidée par les bielles 150 vers l'angle A, de sorte que la cale 110 plaque la structure fibreuse 28 dans cet angle A, a mesure que la deuxième matrice 130 se rapproche du mandrin 100.

La matrice 130 est rapprochée du mandrin 100 jusqu'à une position, dite "position fermée", représentée sur la FIG 5 dans laquelle le mandrin 100, la deuxième matrice 130 et la cale 110 définissent ensemble un espace d'injection 125 de résine entourant la structure fibreuse 28. Dans la position fermée, la première face 111 de la cale fait face au flasque 104 et la structure fibreuse 28 est comprimée entre cette première face 111 et le flasque 104; la deuxième face 112 de la cale fait face à la paroi centrale 102 du mandrin 100 et la structure fibreuse 28 est comprimée entre cette deuxième face 112 et la paroi 102; et la troisième face 113 de la cale est en appui sur la deuxième matrice 130. La structure fibreuse 28 est ainsi comprimée dans l'angle A par la cale 110 lors de l'injection de résine dans l'espace d'injection 125, ce qui empêche la structure fibreuse 28 de se décoller de cet angle A.

Comme représenté sur les FIGS 3-6, un joint 160 est disposé entre la troisième face 113 et la deuxième matrice 130, et entoure chaque paire de bielles 150. Ce joint 160 permet de protéger les bielles contre l'infiltration éventuelle de résine entre la troisième face 113 et la deuxième matrice 130 lors l'injection de la résine.

On notera que des moyens (non représentés) pour injecter la résine dans l'espace d'injection 125 sont également prévus. Par exemple, un des flasques du mandrin (e.g. le flasque 104) peut comprendre au moins un orifice d injection de résine qui débouche à l'intérieur de l'espace 125. Ainsi, l'injection de résine s'effectue au niveau d'une des extrémités de la structure fibreuse 28 maintenue sur le mandrin 100. Par ailleurs, un orifice d'évacuation peut être prévu au niveau du flasque opposé (e.g. le flasque 106).

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Dispositif pour la fabrication d'une pièce en matériau composite, par injection de résine dans une structure fibreuse (28), ce dispositif comprenant :
une première matrice configurée pour supporter la structure fibreuse, la première matrice présentant deux surfaces de support adjacentes définissant entre elles un angle rentrant (A),
au moins une cale (110) présentant des première et deuxième faces (111, 112) adjacentes définissant ensemble une partie en coin (115) configurée pour plaquer la structure fibreuse (28) dans ledit angle (A), et
une deuxième matrice (130) mobile par rapport à la première matrice, les première et deuxième matrices étant configurées pour enserrer la structure fibreuse (28) et la cale (110) de sorte que la première matrice, la deuxième matrice (130) et la cale (110) définissent ensemble, en position fermée, un espace d'injection de résine (125) entourant la structure fibreuse (28);
ce dispositif étant **caractérisé en ce que** la cale (110) est reliée à la deuxième matrice (130) par au moins une bielle (150), cette bielle (150) étant articulée par rapport à la deuxième matrice (130) et à la cale (110) de manière à guider la partie de coin (115) vers ledit angle (A) pour plaquer la structure fibreuse (28) dans cet angle, lorsque la deuxième matrice (130) se rapproche de la première.

2. Dispositif selon la revendication 1, dans lequel une troisième face (113) de la cale (110) est en appui sur la deuxième matrice (130) dans ladite position fermée, cette troisième face (113) étant à l'opposé des première et deuxième faces (111, 112).

3. Dispositif selon la revendication 2, dans lequel un joint (160) est disposé entre la troisième face (113) et la deuxième matrice (130), autour de la bielle (150).

4. Dispositif selon l'une quelconque des revendications 1 à 3, dans lequel la cale (110) est reliée à la deuxième matrice (130) par au moins une paire de bielles (150) parallèles entre elles.

5. Dispositif selon l'une quelconque des revendications 1 à 4, dans lequel la bielle (150) est articulée sur des coquilles (171, 172) configurées pour être insérées, respectivement, dans des cavités (181, 182) ménagées dans la cale (110) et la deuxième matrice (130).

6. Dispositif selon l'une quelconque des revendications 1 à 5, dans lequel la première matrice est un mandrin (100) autour duquel la structure fibreuse (28) est enroulée, le mandrin (100) comprenant une paroi centrale (102) et au moins un flasque latéral (104, 106), cette paroi centrale (102) et ce flasque latéral (104, 106) définissant lesdites surfaces de support adjacentes.

7. Dispositif selon la revendication 6, comprenant plusieurs cales (110), dans lequel chaque cale (110) se présente sous la forme d'un segment d'anneau, les cales (110) étant disposées bout à bout pour couvrir la circonférence totale du mandrin (100).

8. Méthode de fabrication d'une pièce en matériau composite, par injection de résine dans une structure fibreuse (28), dans laquelle on utilise un dispositif selon l'une quelconque des revendications 1 à 7.

9. Méthode de fabrication d'une pièce en matériau composite selon la revendication 8, dans laquelle ladite pièce est un carter de soufflante de moteur d'avion, ce carter comprenant une paroi principale et au moins une bride de fixation, ledit angle rentrant (A) correspondant à l'angle sortant formé entre la paroi principale et la bride de fixation.

## Patentansprüche

1. Vorrichtung für die Herstellung eines Teils aus Verbundwerkstoff durch Einspritzen von Harz in eine Faserstruktur (28), wobei diese Vorrichtung umfasst:
eine erste Matrize, die dazu ausgelegt ist, die Faserstruktur zu tragen, wobei die erste Matrize zwei benachbarte Tragflächen, die zwischen sich eine einspringende Ecke (A) definieren, aufweist,
wenigstens einen Keil (110), der benachbarte erste und zweite Seiten (111, 112) aufweist, die zusammen ein keilförmiges Teil (115) definieren, das dazu ausgelegt ist, die Faserstruktur (28) in die Ecke (A) zu drücken, und
eine zweite Matrize (130), die gegenüber der ersten Matrize beweglich ist, wobei die erste und die zweite Matrize dazu ausgelegt sind, die Faserstruktur (28) und den Keil (110) zu umschließen, so dass die erste Matrize, die zweite Matrize (130) und der Keil (110) zusammen, in geschlossener Position, einen Harzeinspritzraum (125), der die Faserstruktur (28) umgibt, definieren,
wobei diese Vorrichtung **dadurch gekennzeichnet ist, dass** der Keil (110) durch wenigstens eine Lenkstange (150) mit der zweiten Matrize (130) verbunden ist, wobei diese Lenkstange (150) gegenüber der zweiten Matrize (130) und dem Keil (110) angelenkt ist, so dass das keilförmige Teil (115) in Richtung der Ecke (A) geführt wird, um die Faserstruktur (28) in diese Ecke zu drücken, wenn die zweite Matrize (130) sich der ersten nähert.

2. Vorrichtung nach Anspruch 1, wobei eine dritte Seite (113) des Keils (110) in der geschlossenen Position an der zweiten Matrize (130) in Anlage ist, wobei diese dritte Seite (113) von der ersten und der zweiten Seite (111, 112) abgewandt ist.

3. Vorrichtung nach Anspruch 2, wobei eine Dichtung (160) zwischen der dritten Seite (113) und der zweiten Matrize (130), um die Lenkstange (150) angeordnet ist.

4. Vorrichtung nach einem der Ansprüche 1 bis 3, wobei der Keil (110) durch wenigstens ein Paar von zueinander parallelen Lenkstangen (150) mit der zweiten Matrize (130) verbunden ist.

5. Vorrichtung nach einem der Ansprüche 1 bis 4, wobei die Lenkstange (150) an Schalen (171, 172) angelenkt ist, die dazu ausgelegt sind, jeweils in Hohlräume (181, 182), welche in dem Keil (110) und der zweiten Matrize (130) ausgebildet sind, eingesetzt zu werden.

6. Vorrichtung nach einem der Ansprüche 1 bis 5, wobei die erste Matrize eine Wickelhülse (100) ist, um die die Faserstruktur (28) aufgewickelt ist, wobei die Wickelhülse (100) eine mittlere Wand (102) und wenigstens einen Seitenflansch (104, 106) umfasst, wobei diese mittlere Wand (102) und dieser Seitenflansch (104, 106) die benachbarten Tragflächen definieren.

7. Vorrichtung nach Anspruch 6, mit mehreren Keilen (110), wobei jeder Keil (110) in Form eines Ringsegments vorliegt, wobei die Keile (110) aneinander angeordnet sind, um den gesamten Umfang der Wickelhülse (100) abzudecken.

8. Verfahren zur Herstellung eines Teils aus Verbundwerkstoff, durch Einspritzen von Harz in eine Faserstruktur (28), wobei eine Vorrichtung nach einem der Ansprüche 1 bis 7 verwendet wird.

9. Verfahren zur Herstellung eines Teils aus Verbundwerkstoff nach Anspruch 8, wobei das Teil ein Gebläsegehäuse eines Flugzeugtriebwerks ist, wobei dieses Gehäuse eine Hauptwand und wenigstens einen Befestigungsflansch umfasst, wobei die einspringende Ecke (A) der zwischen der Hauptwand und dem Befestigungsflansch gebildeten ausspringenden Ecke entspricht.

## Claims

1. A device for fabricating a composite material part by injecting resin into a fiber structure (28), the device comprising:
a first die configured to support the fiber structure, the first die presenting two adjacent support surfaces defining a reentrant angle (A) between them;
at least one chock (110) presenting first and second adjacent faces (111, 112) together defining a wedge-shaped portion (115) configured to press the fiber structure (28) into said angle (A); and
a second die (130) that is movable relative to the first die, the first and second dies being configured to clamp on the fiber structure (28) and the chock (110) in such a manner that the first die, the second die (130), and the chock (110) together define, in a closed position, a resin injection space (125) surrounding the fiber structure (28);
the device being **characterized in that** the chock (110) is connected to the second die (130) by at least one link (150), the link (150) being hinged relative to the second die (130) and to the chock (110) in such a manner as to guide the wedge-shaped portion (115) towards said angle (A) in order to press the fiber structure (28) into the angle, when the second die (130) approaches the first die.

2. A device according to claim 1, wherein a third face (113) of the chock (110) presses against the second die (130) in said closed position, said third face (113) being opposite from the first and second faces (111, 112).

3. A device according to claim 2, wherein a gasket (160) is arranged between the third face (113) and the second die (130) around the link (150).

4. A device according to any one of claims 1 to 3, wherein the chock (110) is connected to the second die (130) by at least one pair of mutually parallel links (150).

5. A device according to any one of claims 1 to 4, wherein the link (150) is hinged to shells (171, 172) configured to be inserted in respective cavities (181, 182) formed in the chock (110) and in the second die (130).

6. A device according to any one of claims 1 to 5, wherein the first die is a mandrel (100) around which the fiber structure (28) is wound, the mandrel (100) comprising a central wall (102) and at least one cheekplate (104, 106), the central wall (102) and the cheekplate (104, 106) defining said adjacent support surfaces.

7. A device according to claim 6, having a plurality of chocks (110), wherein each chock (110) is in the form of a ring segment, the chocks (110) being arranged end to end so as to cover the entire circumference of the mandrel (100).

8. A method of fabricating a composite material part by injecting resin into a fiber structure (28), wherein a device according to any one of claims 1 to 7 is used.

9. A method of fabricating a composite material part according to claim 8, wherein said part is an aeroengine fan casing, the casing having a main wall and at least one fastener flange, said rentrant angle (A) corresponding to the salient angle formed between the main wall and the fastener flange.
